# EUROPEAN PATENT APPLICATION

(11) **EP 2 051 071 A1**
(43) Date of publication of application: **22.04.2009**
(21) Application number: 07118839.5
(22) Date of filing: 19.10.2007
(51) Int. Cl.: G01N 30/04, G01N 1/14, G01F 3/10, G01N 35/10, G01N 30/20, G01N 30/24

(54) **Flow-controlled loading of a sample loop in a chromatographic system**

(71) Applicant: Agilent Technologies, Inc., Palo Alto, CA 95051 (US)
(72) Inventor: Baeuerle, Martin, 77830, Buehlertal (DE)
(74) Representative: Barth, Daniel Mathias

(57) **Abstract**

A chromatography device (100) comprising a sample loop (102) adapted for receiving a fluidic sample, a flowmeter (106) adapted for generating a measurement signal (116) indicative of a value of a flow of the fluidic sample being loaded from a sample reservoir (104) onto the sample loop (102), and a metering unit (108) adapted for defining an amount of the fluidic sample loaded onto the sample loop (102) based on the measurement signal (116).

## Description

### BACKGROUND ART

The present invention relates to chromatography.

In liquid chromatography, a fluidic analyte may be pumped through a column comprising a material which is capable of separating different components of the fluidic analyte. Such a material, so-called beads, may be filled into a column tube which may be connected to other elements (like a control unit, containers including sample and/or buffers) using fitting elements. Before analysis on a column, the fluidic analyte is loaded into the liquid chromatography apparatus. A controller controls an amount of fluidic sample to be loaded on the liquid chromatography apparatus. Such a controller may receive information from a pressure sensor regarding pressure conditions along the fluidic path.

WO2004/025272 discloses a pressurized fluidic sample injector system consisting of a sample needle, a multiport valve, a sample loop, a metering syringe and a pressure assist pump. The speed of sample transport into the sample loop is increased by pressurizing the fluid in the system and metering the sample into the sample loop. The elevated system pressure shall allow the fluids to be moved faster than the vapor pressure would normally allow in a system at ambient pressure.

However, conventional chromatography apparatuses may lack sufficient accuracy.

### DISCLOSURE

It is an object of the invention to provide a sufficiently accurate chromatography system. The object is solved by the independent claims. Further embodiments are shown by the dependent claims.

According to an exemplary embodiment, a chromatography device (such as a high performance liquid chromatography device, HPLC) is provided comprising a sample loop (for instance a capillary located and dimensioned for accommodating a predefined sample volume) adapted for receiving a fluidic sample (for instance a biochemical solution), a flowmeter adapted for generating a measurement signal (for example an electric signal) indicative of a value (for instance an amount) of a flow of the fluidic sample being loaded from a sample reservoir (for instance a vial) onto the sample loop, and a metering unit adapted for defining an amount of the fluidic sample (to be) loaded onto the sample loop based on the measurement signal.

According to another exemplary embodiment, a method of operating a chromatography device is provided, the method comprising loading a fluidic sample from a sample reservoir onto a sample loop adapted for receiving the fluidic sample, generating a measurement signal indicative of a value of a flow of the fluidic sample being loaded from the sample reservoir onto the sample loop, and defining an amount of the fluidic sample (to be) loaded onto the sample loop based on the measurement signal.

According to still another exemplary embodiment of the present invention, a software program or product is provided, preferably stored on a data carrier, for controlling or executing the method having the above mentioned features, when run on a data processing system such as a computer.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied in the context of chromatography control. The sample loading scheme according to an embodiment of the invention can be performed or assisted by a computer program, i.e. by software, or by using one or more special electronic optimization circuits, i.e. in hardware, or in hybrid form, i.e. by means of software components and hardware components.

In the context of this application, the term "chromatography" may denote a family of analytical chemistry techniques for the separation of mixtures. It may involve passing the sample, a mixture which contains the analyte, in the "mobile phase", often in a stream of solvent, through the "stationary phase." The stationary phase retards the passage of the components of the sample. When components pass through the system at different rates they become separated in time. Chromatography may also include the loading of a sample on a chromatographic system. Particularly, the term "chromatography" may cover "liquid chromatography" (LC).

The term "sample loop" may particularly denote a portion of a capillary system which is adapted for accommodating at the maximum a predetermined amount of sample material. Before an actual chromatographic analysis involving a separation of fractions of the sample by a separation column, the sample may first be loaded from a vial or another sample container onto the sample loop by dragging the sample onto the sample loop using a metering unit. Subsequently, for instance in a reverse fluid flow direction, the loaded sample may be pumped by a pressing force from the sample loop to the chromatographic column.

The term "flowmeter" may particularly denote any device being capable of measuring a flow, i.e. a volume or an amount or a mass of a streaming fluid. Thus, a flowmeter may denote an instrument for measuring the flow of fluids, particularly liquids.

The term "metering unit" may denote any component defining an amount or a flow of a fluid through the system. Thus, the metering unit may define whether a larger or small amount of fluid is transported through a fluid communication system.

The term "fluidic sample" may particularly denote any solid, liquid or gaseous substance, or a combination thereof. For instance, the substance may be a liquid or a suspension, furthermore particularly a biological substance (such as blood or a cell content). Such a biological substance may comprise proteins, polypeptides, nucleic acids, lipids, viruses, bacteria, etc.

According to an exemplary embodiment, a chromatography device is provided in which an amount of a fluidic sample to be loaded on a sample loop along a first direction is defined by a metering unit which uses, as a criteria for the definition of this amount, a measurement signal related to a flow of the fluidic sample as determined by a flowmeter. Thus, an amount of sample to be loaded from a vial or a sample container onto the sample loop along the first direction can be precisely defined with low effort by implementing a flowmeter, since expensive components such as a pressure sensor may be dispensable. Furthermore, artificial effects such as a degassing of the sample during the sample load procedure can be securely prevented. Subsequently, it is possible to reverse the fluid flow direction and to pump the fluidic sample loaded onto the sample loop under the influence of a high pressure pump towards a separation column for chromatographic separation.

Next, further exemplary embodiments of the chromatography device will be explained. However, these embodiments also apply to the method and to the software program or product.

According to an exemplary embodiment, the flowmeter may be in direct fluid communication with the sample loop. In other words, there may be a direct fluid connection between the flowmeter and the sample loop without any further component therebetween. Thus, the flow of the fluidic sample may be measured at a very characteristic position in front of the sample loop so that the amount of sample loaded onto the sample loop can be determined with high accuracy.

The flowmeter may be arranged in a manner that the fluidic sample flows from the sample reservoir through the flowmeter before being loaded onto the sample loop. Therefore, the flowmeter may be arranged at a very early stage in the fluid flow path during loading, which allows to derive meaningful control information for the metering device defining an amount of sample to be loaded.

The flowmeter may be a volumetric flowmeter, i.e. a flowmeter measuring a volume of the fluidic sample passing the flowmeter. Alternatively, the flowmeter may be a mass flowmeter determining a mass of the fluidic sample flowing through the flow sensor. Therefore, a direct measure for the amount of fluid flowing through the system is obtained, in contrast to pure pressure measuring systems which only derive an indirect measure of the fluidic sample. Therefore, the definition or adjustment of the volume to be loaded may be defined with high accuracy, since no recalculation of an indirect measure to a direct measure has to be performed.

The flowmeter may be adapted for generating a measurement signal indicative of a flow rate of the fluidic sample being loaded from a sample reservoir onto the sample loop. Such a flow rate may include information about a sample volume or a sample mass per time which flows along the fluidic path. This flow rate may provide the metering device with precise information regarding the fluidic configuration within the sample loading system, thereby further refining the sample loading accuracy.

The flowmeter may be adapted for generating a measurement signal indicative of a flow volume of the fluidic sample being loaded from a sample reservoir onto the sample loop. Due to the very small compressibility of liquids, the flow volume is a direct measure for the amount of sample to be loaded, and may therefore provide reliable information for determining a volume loaded onto the system.

The flowmeter may be adapted for generating a measurement signal indicative of a flow volume of a fluidic sample. The flowmeter may allow to determine the fluidic sample flow even with very small volumes (for instance in the order of magnitude of microliters and below). Small volumes are typical in the analysis of biological samples, which makes the sample loading scheme specifically appropriate for biochemical experiments.

Another advantageous embodiment of the flowmeter involves the characteristic that the flowmeter can withstand high pressures, particularly pressures of at least 100 bar, more particularly of at least 500 bar, still more particularly of at least 1000 bar. The system may be operated particularly in two modes: In a sample loading mode, the pressure in the system may be around the atmospheric pressure, i.e. about 1 bar. In a sample separation mode, in which the previously loaded sample is pumped through a separation column, the pressure in the system may be much larger such as several hundreds to thousands of bar. More precisely, after having loaded the sample on the sample loop, a tip or needle immersed into a sample container used for this purpose may be moved to engage a seat in the chromatography apparatus. Then, the fluid flow configuration may be switched so that the sample loop is now operated in a high pressure environment in a fluidic path between a pump and a column. Thus, it may be advantageous when the flowmeter provides a combination of a high accuracy regarding the volumes to be detected and is operable even under the influence of a high pressure.

The flowmeter may be adapted for withstanding at least one of the group consisting of an acid, a base, an alcohol and a mixture thereof. These and other chemicals may occur during the chromatographic process, so that a robustness of the flowmeter regarding these another influences may be advantageous.

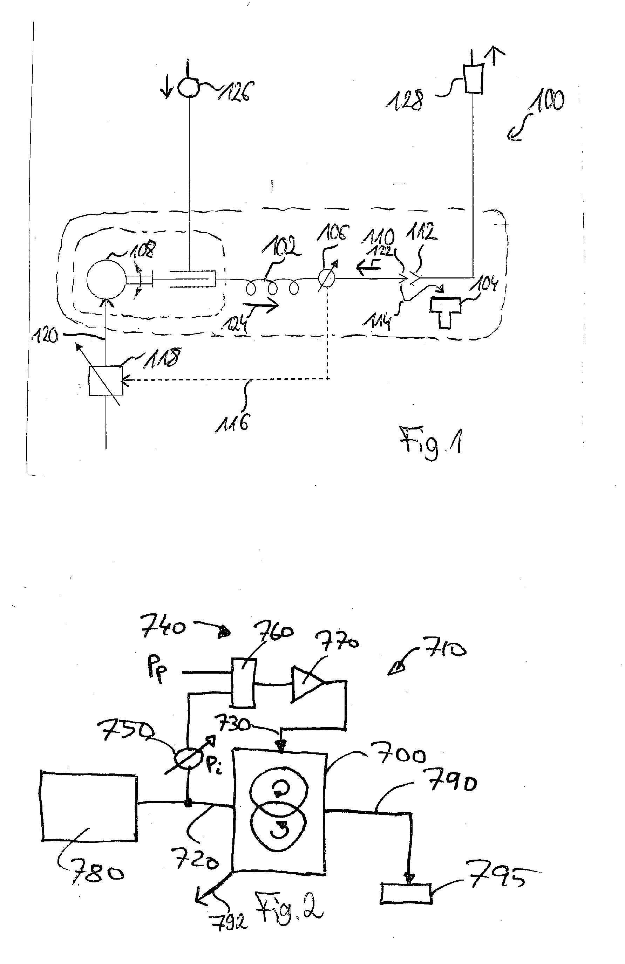

The flowmeter may be adapted to perform a measurement based on different physical principals. The flowmeter may perform such a measurement based on a thermal measurement. In this context, the system may be provided with a predetermined thermal load and the measurement of the temperature change may allow to derive the flow of a liquid having an influence on the thermodynamic properties of the system. Alternatively, a magnetic measurement may be performed. In the context of a magnetic flowmeter, a magnetic field may be applied to a tube which may result in a potential difference proportional to the flow velocity perpendicular to the flux lines. The physical principle of such an embodiment is Faraday's law of electromagnetic induction. Since water is electrically conductive, a flow of aqueous samples may be measured in connection with a magnetic flowmeter. Alternatively, a mechanical measurement may be performed. Mechanical flowmeters may be piston meters, Woltmann meters, Venturi meters, Dall tubes, orifice plates, Pitot tubes, paddle wheels, Pelton wheels, or turbine flowmeters. A flowmeter may also be based on a motion measurement. A motion of the fluid along a fluidic path may be a measure for the flow. A displacement measurement (see for instance Fig. 2 to Fig. 4) may be based on a determination of a displacement of a volume by a fluid which is a measure for the flow. An ultrasonic measurement of the flow is possible as well, wherein such ultrasonic flowmeters may measure the difference of the transit time of ultrasonic pulses propagating in and against flow direction. This time difference may be a measure for the average velocity of the fluid along the path of the ultrasonic beam. It is also possible to perform a Corolis force measurement. Using the Corolis effect that causes a latterly vibrating tube to distort, a direct measurement of mass flow can be obtained in a Corolis flowmeter. Furthermore, a Vortex measurement is possible with the flowmeter. In a such an embodiment, an object (which may be denoted as a shedder bar) may be placed in a part of the fluid. As the fluid passes this bar, disturbances in the flow called vortices are created. The speed at which these vortices are created may be proportional to the flow rate of the fluid.

The flowmeter may be arranged in an injection path of the chromatography device. The injection path of the chromatography device may be a path along which the fluidic sample is introduced in the system from a vial through a needle through a flowmeter onto a sample loop. Thus, this injection path differs from a measurement path which may be subsequently activated after the injection and which pumps the loaded fluidic sample from the sample loop to a chromatographic column. According to one embodiment, the injection path is different from the measurement path. It is possible that a part of the injection path is identical to the measurement path, whereas another part differs.

The sample loop may be arranged between the flowmeter and the metering unit. By sandwiching the sample loop between flowmeter and metering unit, a flow of the loaded fluid is determined before being loaded onto the sample loop so that the metering device can use this control information at a very early stage to properly control the amount to be loaded.

The metering unit may be adapted for dragging the defined amount of the fluidic sample from the sample reservoir through the flowmeter onto the sample loop. Thus, the metering unit may be operated in a sample pulling operation mode and may therefore be arranged downstream of flowmeter and sample loop in the injection path configuration.

The metering unit may be a motor-driven nozzle. Such a component may be provided with a miniature size and with a high control precision.

The device may comprise a control unit (such as a CPU, Central Processing Unit) being directly supplied with the measurement signal and being adapted for providing the metering unit with a control signal derived from the measurement signal and including an instruction for adjusting a flow of the fluidic sample. By functionally arranging a control function between the flow sensor and the metering unit, it is possible that the measurement signal of the flow sensor is pre-processed by the control unit allowing to apply algorithms to properly determine an amount of fluid which is suitable in the present configuration from a raw measurement signal. This already pre-processed control signal may be then supplied to the metering unit which carries out the command specified by the control unit.

The control unit may be adapted for adjusting the flow of the fluidic sample in a manner that a time required for sample loading is minimized and/or in a manner that a speed of sample loading is maximized. Thus, the sample loading procedure may be optimized by the flow sensor measurement and control signal generation may be based on the result of this measurement.

The device may comprise an injection needle adapted for injecting the fluidic sample from the sample reservoir onto the sample loop. Such an injection needle may be positioned in a seat in a configuration when a loaded sample is transported from the sample loop to the column. However, in the injection configuration, the injection needle or tip may be dipped or immersed into a vial or fluid container for sucking the fluidic sample for subsequent transfer through the flow sensor and onto the sample loop. Thus, the injection needle may be provided movably.

The seat corresponding to the needle may be adapted to be selectively brought into engagement with the injection needle for guiding the fluidic sample loaded onto the sample loop through the chromatography device (that is to say for performing the actual chromatographic analysis after having loaded the sample). The seat corresponding to the needle may further be adapted to be selectively brought out of engagement with the injection needle for loading the fluidic sample onto the sample loop prior to the actual chromatographic analysis. The injection needle may be operated at a pressure close to the atmospheric pressure during loading, and may be sealingly operated in engagement with the seat in the presence of pressures of hundreds or thousands of bar generated by a pump which pumps the sample preloaded onto the sample loop through the column.

The injection needle may be movable to immerse into the sample reservoir for injecting the fluidic sample onto the sample loop. Thus, the injection needle may be movable between the seat configuration and the configuration in which it is dipped into the sample reservoir.

The device may comprise a chromatographic column to be coupled for fluid communication with a sample loop and adapted for separating components of the fluidic sample. In a configuration in which the fluidic sample is loaded on the sample loop, the chromatographic column may be short-circuited or in other words provided apart from the injection path. After loading, the fluid flow direction may be reversed or altered so that the fluid flows from the sample loop through the needle/seat configuration to the chromatographic column at which the actual separation is performed. A pump capable of generating a pressing force may be coupled for fluid communication with the sample loop and may be adapted for pumping the fluidic sample loaded onto the sample loop towards the chromatographic column. From the moment onwards at which the (previously short-circuited or deactivated) pump is switched into the fluid flow path from the sample loop to the column, the system may operate at a high pressure of several hundred bars. The pump may promote the separation procedure by pumping the fluidic sample onto the column.

The flowmeter may be arranged apart from a fluidic path which is effected by the pump. This configuration may allow to use flowmeters which are not capable of withstanding high pressures of several hundred bars as generated by the pump. The sample loop may also be arranged to be switchable into a fluid path between the pump and chromatographic column. Thus, in both a sample loading configuration and a component separation configuration of the chromatography device, the sample loop accommodating the previously injected sample may be in the active flow path.

The device may comprise a switchable valve unit adapted to be operated for switching the chromatography device between different fluid path configurations. An example of such a switching valve (for instance having six parts) is disclosed in EP 1,520,837 A1 by the same applicant Agilent Technologies. Such a micro fluidic valve may be integrated in the chromatography system according to an exemplary embodiment.

The flowmeter may be arranged between a sample loop and the injection needle. Alternatively, the flowmeter may be arranged between a sample loop and a metering unit. In both configurations, the sample loop is arranged in the injection path closely coupled to the sample loop to thereby provide meaningful sensor information.

The flowmeter may be adapted for intaking and metering a defined volume of the fluidic sample and may be adapted for controlling the fluid intake for determining a flow rate of the fluidic sample. The flowmeter may comprise a displacement unit at least partly capable of precise displacement. The displacement of the displacement unit may be a control variable for controlling the fluid intake for determining a flow rate of the fluidic sample. Such a configuration is shown in Fig. 2 to Fig. 4. It allows for a flowmeter which is specifically appropriate for employment within an injection path of the chromatography device.

The device may comprise a chip in which at least a part of the components of the chromatography device is integrated. Thus, the chromatography device may be adapted as a fluidic chip device denoting a device for processing a fluid which may at least partially be provided in and/or on a chip as a substrate. In this context, the substrate may be any single layer or multiple layer arrangement serving as a carrier element of a fluidic chip device. In and/or on a substrate, one or more functional components of the fluidic chip device may be foreseeing.

The device may be adapted as a liquid chromatography device, more particularly as a high performance liquid chromatography device (HPLC). In such a configuration, the fluidic sample may be introduced into a mobile phase, and the mobile phase may be driven through a stationary phase in order to separate components of the fluidic sample comprised in the mobile phase. The sample loop may be adapted to be coupled between the mobile phase drive, for driving a mobile phase, and the separating device having the stationary phase.

According to an exemplary embodiment, for injecting the sample into the system, a tip may be dipped into a vial and a metering unit may drag the sample onto a sample loop. In this configuration, a path between a pump and a column may be short-circuited or deactivated. During this sample injection, the sample loop may be brought to an environment pressure. Afterwards the loaded sample may be pressed on a high pressure under the influence of a pump onto the column for further analysis.

The flowmeter may be arranged upstream or downstream of the sample loop, but apart from a region effected by the pump in this operation mode. The combination of a metering device, a sample loop and a flow sensor in an injection path, particularly with the sample loop being switchable between pump and column, may allow to provide an efficient sample loading architecture.

The flowmeter used should be very precise in a low pressure operation (i.e. when the metering unit drags the sample via the tip into the sample loop), and may have the capability to be operated also in a high pressure mode.

In contrast to conventional approaches, exemplary embodiments do not simply count the number of steps at a motor for determining information regarding an amount of sample to be introduced in the system. In such a conventional system, when the sample is loaded in a fast manner, the motor is driven in a fast manner which may result in an undesired degassing of the sample. In contrast to conventional approaches to solve this problem providing a pressure sensor within the injection path which involves a high effort and is not very precise, exemplary embodiments involve a flow sensor (i.e. a volumetric measurement member) to obtain a more precise information which amount of sample has to be injected (which is very precise also in the event of degassing).

Thus, exemplary embodiments perform a direct flow measurement (streaming flow measurement) without a complicated necessity to first measure a pressure and to subsequently recalculate the pressure into a flow which also involves the danger of mathematical artifacts.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 shows a liquid chromatography apparatus according to an exemplary embodiment.

Fig. 2 to Fig. 4 show flowmeters implementable in a liquid chromatography apparatus according to an exemplary embodiment.

Fig. 5 shows a liquid chromatography apparatus according to another exemplary embodiment.

The illustration in the drawing is schematically.

In the following, referring to **Fig. 1**, a high performance liquid chromatography device (HPLC) 100 according to an exemplary embodiment of the invention will be explained.

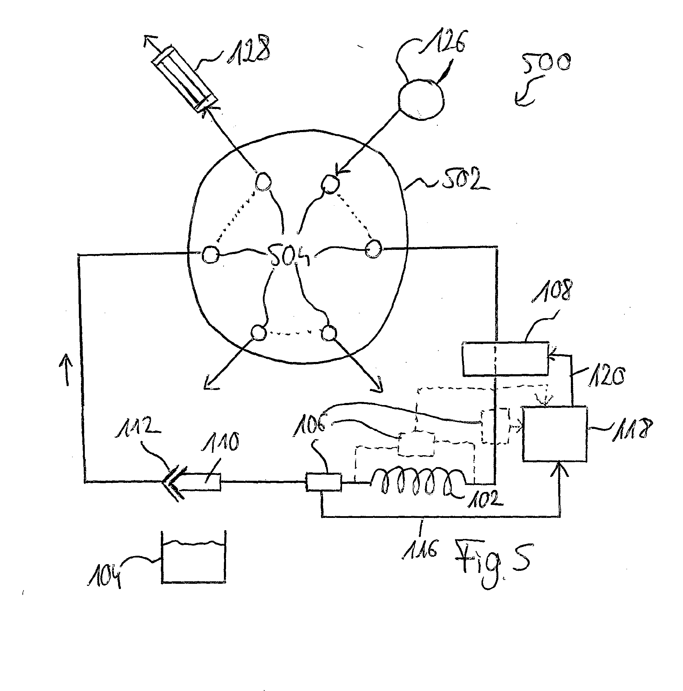

Only a portion of the HPLC 100 is shown in Fig. 1, for the sake of simplicity. For example, a switchable valve for switching between an injection operation mode and a separation operation mode is omitted in Fig. 1 but can be seen in Fig. 5.

The chromatography device 100 comprises a sample loop 102 (which may be a capillary adapted for receiving a certain amount of sample, and which may or may not comprise a spiral portion) adapted for receiving a fluidic sample which is stored in a vial 104 (which may be a container having a capacity of several milliliters). A flowmeter 106 is provided which is adapting for generating a measurement signal 116 indicative of a value of a flow of the fluidic sample being loaded from the vial 104 (a sample reservoir) onto the sample loop 102. For the purpose of dragging the fluidic sample from the vial 104 through the flowmeter 106 onto the sample loop 102, a metering unit 108 is provided which defines an amount of the fluidic sample to be loaded onto the sample loop 102 based on the measurement signal 116.

For injecting a sample from the vial 104 onto the sample loop 102, an injection needle 110 which is shown in Fig. 1 in sealing engagement with a seat 112 is moved to be brought out of engagement with the seat, so that the injection needle 110 is dipped into the vial 104 (indicated schematically by an arcuate arrow 114). The fluid is then sucked from the vial 104 through the injection needle 110 to the flowmeter 106 which measures the flow of the dragged fluidic sample. This information is provided as an electric measurement signal 116 to a control unit 118 (such as a CPU). The control unit 118 calculates from the directly measured flow value represented by the measurement signal 116, an amount of sample to be loaded onto the sample loop 102, calculates a corresponding control signal 120 and provides the latter to the processor controlled metering unit 108. In accordance with this control signal 120, the metering unit 108 then injects a defined amount of sample onto the sample loop 102 with a fluid flow direction indicated with an arrow 122 in a sample loading operation mode.

As can be taken from Fig. 1, the flowmeter 106 in direct fluid communication with the sample loop 102, and is arranged so that the fluidic sample flows (in a direction 122) from the sample reservoir 104 to the flowmeter 106 before being loaded onto the sample loop 102. The flowmeter 106 is a volumetric flowmeter. It generates the measurement signal 116 indicative of a flow rate of the fluidic sample being loaded from the sample reservoir 104 onto the sample loop 102. The flowmeter 106 is capable to measure sample volumes in the order of magnitude of microliters. During the loading of the sample from the container 104 onto the sample loop 102, the pressure in the injection path is close to the atmospheric pressure, for instance around 1 bar. Even when the sample in a sample container 104 comprises an acids, a base, an alcohol, a mixture thereof, or biohazard components, the flow sensor 106 may withstand such substances (for instance by covering portions of the flowmeter 106 in direct contact with such chemicals with a corresponding coating).

The metering unit 108 drags the defined amount of the fluidic sample from the sample reservoir 104 through the flowmeter 106 onto the sample loop 102, under the control of the control unit 118. The metering unit 108 is a motor-driven nozzle wherein a motor control is performed based on the control signal 120. The control unit 118 may have operate in accordance with an algorithm or may be programmed in a manner that a time required for sample loading is minimized and/or that a speed for sample loading is maximized. An input signal to such an algorithm may be the flow encoded in the measurement signal 116. An output signal of such an algorithm may be the control signal 120.

After having loaded the sample 102 from the container 104, the system may be brought into another operation mode for performing an actual separation. For this purpose, the injection needle 110 is driven back into the seat 112 for sealing engagement. A switchable valve (not shown in Fig. 1) may be switched so that the fluid flow path is modified from the injection direction 122 to a separation direction indicated schematically by an arrow 124. A pump 126 may be switched into the active fluid flow path and may press the sample previously loaded on the sample loop 102 from the sample loop 102 towards a chromatographic separation column 128. Thus, the sample loop 102 is arranged to be selectively switchable into a fluidic path between the pump 126 and the chromatographic column 128. The switchable valve unit (not shown) is adapted to be operated for switching the chromatography device 100 between different fluid flow configurations.

The injection needle 110/seat 112 configuration may be pressure sealed, i.e. may maintain sealed even in the presence of a high pressure of hundreds or even thousands of bar which may occur in the system 100 after activating the pump 126.

**Fig. 2** shows an embodiment of a flowmeter 710.

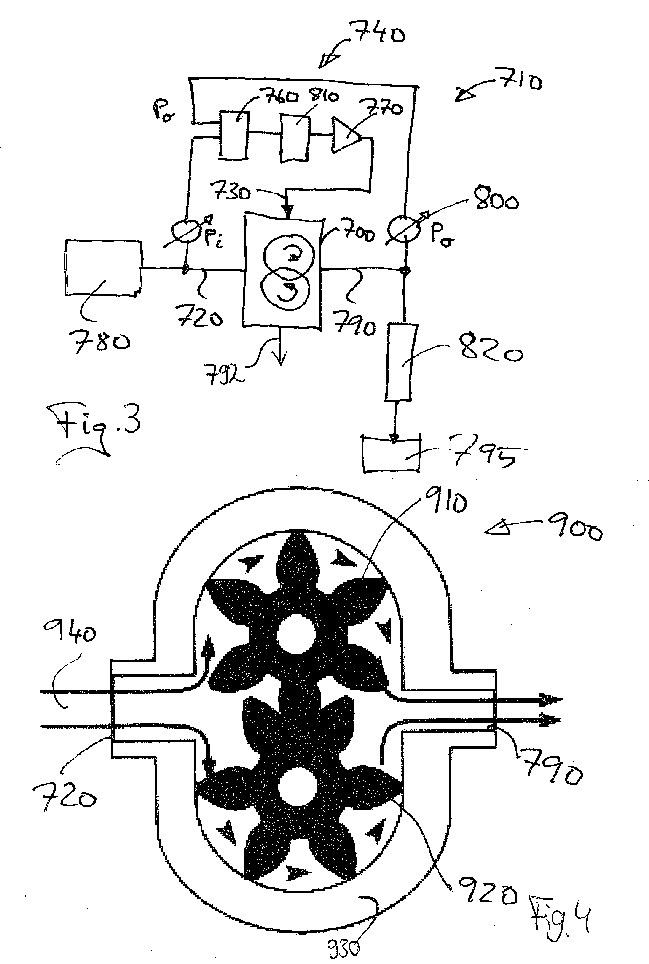

A metering device of the flowmeter 710 comprises a volume displacement device 700. The volume displacement device 700 is adapted for displacing a defined volume of the intaken fluid received at input 720. Such volume displacement device 700 might be or comprise a gear pump, a toothed wheel pump (as shown for instance in Fig. 4), a worm gearing, a worm gear drive, etc. The volume displacement device 700 in the example of Fig. 2 is driven by a drive (as indicated by arrow 730) for actively driving the volume displacement. The drive 730 is controlled by a control unit 740 and allows for compensating a pressure drop according along the volume displacement device 700 otherwise resulting for instance from leakages or mechanical and/or hydraulic friction within the volume displacement device 700.

The control unit 740 receives an input pressure value Pi (from a pressure sensor 750 or from a member for measuring a flow, such as a flowmeter) indicative of an input pressure at the input 720 of the volume displacement device 700. The control unit 740 in the example of Fig. 2 further comprises a comparator 760 having as inputs the input pressure value Pi and a preset pressure value Pp. The control unit 740 thus controls the fluid intake of the metering device in response to the received input pressure value Pi by comparing the received input pressure value Pi with a preset pressure value Pp und controlling the volume displacement device 700 based on a difference between the received input pressure value Pi and the preset pressure value Pp.

The control unit 740 might further comprise an amplifier 770 adapted for converting the output signal of the comparator 760 into corresponding energy required for driving the drive 730.

In the example of Fig. 2, the flowmeter 710 is coupled to an output of a sample reservoir 780 (and/or a needle 110) and its output 790 might be coupled to a sample loop 795. Thus the flowmeter 710 allows monitoring the (actual) flow rate of the fluid flow streaming at the output 720 of the sample reservoir 780 of the HPLC device.

**Fig. 3** shows a further embodiment, wherein the control unit 740 receives as second input an output pressure value Po measured by a pressure sensor 800 (or by a member for measuring a flow, such as a flowmeter) at the output 790 and being indicative of the pressure at the output 790. The control unit 740 controls the fluid intake of the volume displacement device 700 in response to the received input Pi and output Po pressure values. In the example of Fig. 3, the comparator 760 compares both the input Pi and output Po pressure values and provides a control signal at its output in response to a difference between the received input Pi and output Po pressure values. In the example of Fig. 3, a further comparator 810 might compare the difference signal to a setpoint value (Δ Pp) being coupled between the comparator 760 and the amplifier 770 in order to allow controlling the volume displacement device to act for achieving a preset differential pressure. This differential pressure may include the value of zero.

In the example of Fig. 3, the flowmeter 710 is coupled between the output of the sample reservoir 780 and a hydraulic load 820. Thus the flowmeter 710 allows monitoring the (actual) flow rate of the fluid flow streaming into the hydraulic load 820 at a certain working pressure.

In both Fig. 2 and Fig. 3, the data output (data interface) of the flowmeter 710 is indicated by the arrow 792, so that any kind of data output, for instance a value of flow rate, can be provided to and used by one or more units external to the flowmeter 710, for instance to a controller (not shown in Fig. 2 and Fig. 3).

**Fig. 4** shows a gear pump (or toothed wheel pump) 900 as an embodiment of the volume displacement device 700. The gear pump 900 comprises two meshing gears 910 and 920 (in a housing 930) to pump incoming fluid 940 by displacement. The gear pump 900 has a fixed displacement, thus pumping a constant amount offluid for each revolution, or a portion thereof, of the gears 910 and 920. As the gears 910 and 920 rotate they separate on the intake side of the pump, creating a void and suction which is filled by fluid. The fluid is carried by the gears 910 and 920 to the side 790 of the pump 900, where the meshing of the gears 910 and 920 displace the fluid. The mechanical clearances are preferably designed to be as small as possible, as tight clearances, along with the speed of rotation, effectively prevent the fluid from leaking backwards. A rigid design of the gears 910, 920 and the housing 930 allow for very high pressures and the ability to pump highly viscous fluids.

Systems similar to the systems shown in Fig. 2 to Fig. 4 are disclosed in US 11/880,193 filed July 20, 2007, claiming a priority of July 21, 2006, and being incorporated by reference in its entirety in the disclosure of the present application.

Other types of gear pumps 900 might be used accordingly for other exemplary embodiments, for instance as the gear pumps disclosed in US 5,184,519 A, US 4,409,829, US 4,815,318, WO 2005/119185 A1, or US 6,658,747 B2.

Readout of the actual displacement rate can be done by monitoring the driving speed of the volume displacement device 700 or a sensing device may be employed, which records the actual speed or volumetric displacement.

In the following, referring to **Fig. 5**, a HPLC device 500 according to another exemplary embodiment will be explained.

In the embodiment of Fig. 5, the flowmeter 106 is located between the sample loop 102 and the injection needle 110. However, two alternative positions (not the only possible ones) for the flowmeter 106 are shown, with dotted lines, namely between the sample loop 102 and the metering unit 108 or connected in parallel to the sample loop 102.

Furthermore, in the embodiment of Fig. 5, a switchable valve unit 502 is shown having a plurality of externally accessible ports 504 connectable by switchable conduits (indicated in dotted lines in a specific switch state). Thus, specific fluid paths can be selected to be activated or deactivated by switching (for instance rotating) the valve unit 502. In the configuration of Fig. 5, there is a fluid connection from the pump 126 through two of the ports 504 to the metering unit 108, through the sample loop 102, through the flowmeter 106, through the injection needle 110, through the seat 112, through two further ones of the ports 504 of the switchable valve unit 502 and into the chromatography column 128. However, it is also possible to short-circuit for instance the pump 126 and the chromatographic column 128, for instance for loading the sample onto the sample loop 102.

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. A chromatography device (100), comprising
a sample loop (102) adapted for receiving a fluidic sample;
a flowmeter (106) adapted for generating a measurement signal (116) indicative of a value of a flow of the fluidic sample being loaded from a sample reservoir (104) onto the sample loop (102);
a metering unit (108) adapted for defining an amount of the fluidic sample loaded onto the sample loop (102) based on the measurement signal (116).

2. The device (100) of claim 1, comprising at least one of the following features:
the flowmeter (106) is in direct fluid communication with the sample loop (102);
the flowmeter (106) is arranged in a manner that the fluidic sample flows from the sample reservoir (104) through the flowmeter (106) before being loaded onto the sample loop (102);
the flowmeter (106) is one of the group consisting of a volumetric flowmeter, and a mass flowmeter;
the flowmeter (106) is adapted for generating a measurement signal (116) indicative of a flow rate of the fluidic sample being loaded from a sample reservoir (104) onto the sample loop (102);
the flowmeter (106) is adapted for generating a measurement signal (116) indicative of a flow volume of the fluidic sample being loaded from a sample reservoir (104) onto the sample loop (102);
the flowmeter (106) is adapted for withstanding a pressure of at least 100 bar, particularly of at least 500 bar, more particularly of at least 1000 bar;
the flowmeter (106) is adapted for withstanding at least one of the group consisting of an acid, a base, an alcohol, and a mixture thereof;
the flowmeter (106) is adapted to perform a measurement based on at least one of the group consisting of a thermal measurement, a magnetic measurement, a mechanical measurement, a motion measurement, a displacement measurement, an ultrasonic measurement, a Corolis force measurement, a Laser Doppler measurement, and a Vortex measurement;
the flowmeter (106) is arranged in an injection path of the chromatography device (100);
the sample loop (102) is arranged between the flowmeter (106) and the metering unit (108);
the metering unit (108) is adapted for dragging the defined amount of the fluidic sample from the sample reservoir (104) through the flowmeter (106) onto the sample loop (102);
the metering unit (108) is a motor-driven nozzle;
the device (100) comprises a switchable valve unit (502) adapted to be operated for switching the chromatography device (500) between different fluid path configurations;
the flowmeter (106) is arranged between the sample loop (102) and the metering unit (108);
the device (100) comprises a chip in which at least a part of the components of the chromatography device (100) is integrated;
the device (100) is adapted as a liquid chromatography device;
the device (100) is adapted as a High Performance Liquid Chromatography device.

3. The device (100) of claim 1 or any one of the preceding claims,
comprising a control unit (118) being supplied with the measurement signal (116) and being adapted for providing the metering unit (108) with a control signal (120) derived based on the measurement signal (116) for adjusting a flow of the fluidic sample.

4. The device (100) of claim 3, comprising at least one of the following features:
the control unit (118) is adapted for adjusting the flow of the fluidic sample in a manner that a time required for sample loading is minimized;
the control unit (118) is adapted for adjusting the flow of the fluidic sample in a manner that a speed for sample loading is maximized.

5. The device (100) of claim 1 or any one of the preceding claims,
comprising an injection needle (110) adapted for injecting the fluidic sample from the sample reservoir (104) onto the sample loop (102).

6. The device (100) of claim 5, comprising at least one of the following features:
the device (100) comprises a seat (112) adapted to be selectively brought in sealing engagement with the injection needle (110) for guiding the fluidic sample loaded onto the sample loop (102) through the chromatography device (100), and adapted to be selectively brought out of engagement with the injection needle (110) for injecting the fluidic sample onto the sample loop (102);
the injection needle (110) is movable to immerse into the sample reservoir (104) for injecting the fluidic sample onto the sample loop (102);
the flowmeter (106) is arranged between the sample loop (102) and the injection needle (110).

7. The device (100) of claim 1 or any one of the preceding claims,
comprising a chromatographic column (128) couplable for fluid communication with the sample loop (102) and adapted for separating components of the fluidic sample.

8. The device (100) of claim 7,
comprising a pump (126) couplable for fluid communication with the sample loop (102) and adapted for pumping the fluidic sample loaded onto the sample loop (102) towards the chromatographic column (128).

9. The device (100) of claim 8, comprising at least one of the following features:
the flowmeter (106) is arranged apart from a fluidic path which is effected by the pump (126);
the sample loop (102) is arranged to be switchable into a fluidic path between the pump (126) and the chromatographic column (128);
the sample loop (102) loaded with the fluidic sample is arranged to be switchable into a fluidic path between the pump (126) and the chromatographic column (128).

10. The device of claim 1 or any one of the preceding claims,
wherein the flowmeter (710) is adapted for intaking and metering a defined volume of the fluidic sample and is adapted for controlling the fluid intake for determining a flow rate of the fluidic sample.

11. The device of claim 10,
wherein the flowmeter (710) comprises a displacement unit (700) at least partly capable of precise displacement.

12. The device of claim 11,
wherein the displacement of the displacement unit (700) is a control variable for controlling the fluid intake for determining a flow rate of the fluidic sample.

13. The device (100) of claim 1 or any one of the preceding claims,
wherein the fluidic sample is to be introduced into a mobile phase, and the mobile phase is driven through a stationary phase in order to separate compounds of the fluidic sample comprised in the mobile phase.

14. The device (100) of claim 13,
wherein the sample loop (102) is adapted to be coupled between a mobile phase drive (126), for driving the mobile phase, and a separating device (128) having the stationary phase.

15. A method of operating a chromatography device (100), the method comprising
loading a fluidic sample from a sample reservoir (104) onto a sample loop (102) adapted for receiving the fluidic sample;
generating a measurement signal (116) indicative of a value of a flow of the fluidic sample being loaded from the sample reservoir (104) onto the sample loop (102);
defining an amount of the fluidic sample loaded onto the sample loop (102) based on the measurement signal (116).

16. A software program or product, preferably stored on a data carrier, for controlling or executing the method of the preceding claim, when run on a data processing system such as a computer.

## Amended claims

### Amended claims in accordance with Rule 137(2) EPC.

**1.** A chromatography device (100), comprising
a sample loop (102) adapted for receiving a fluidic sample;
a flowmeter (106) adapted for generating a measurement signal (116) indicative of a value of a flow of the fluidic sample being loaded from a sample reservoir (104) onto the sample loop (102);
a metering unit (108) adapted for defining an amount of the fluidic sample loaded onto the sample loop (102) based on the measurement signal (116).

**2.** The device (100) of claim 1, wherein:
the measurement signal (116) is indicative of at least one of a flow rate and
a flow volume of the fluidic sample being loaded from the sample reservoir (104) onto the sample loop (102);

**3.** The device (100) of claim 1 or any one of the above claims, comprising at least one of:
the flowmeter (106) is one of the group consisting of a volumetric flowmeter, and a mass flowmeter;
the flowmeter (106) is adapted to perform a measurement based on at least one of the group consisting of a thermal measurement, a magnetic measurement, a mechanical measurement, a motion measurement, a displacement measurement, an ultrasonic measurement, a Corolis force measurement, a Laser Doppler measurement, and a Vortex measurement;
the flowmeter (710) is adapted for intaking and metering a defined volume of the fluidic sample and is adapted for controlling the fluid intake for determining a flow rate of the fluidic sample.

**4.** The device (100) of claim 1 or any one of the above claims, comprising at least one of:
the flowmeter (106) is in direct fluid communication with the sample loop (102);
the flowmeter (1 06) is arranged in a manner that the fluidic sample flows from the sample reservoir (104) through the flowmeter (106) before being loaded onto the sample loop (102);
the flowmeter (106) is arranged between the sample loop (102) and the metering unit (108);
the sample loop (102) is arranged between the flowmeter (106) and the metering unit (108);
the metering unit (108) is adapted for dragging the defined amount of the fluidic sample from the sample reservoir (104) through the flowmeter (106) onto the sample loop (102).

**5.** The device (100) of claim 1 or any one of the above claims, comprising at least one of:
a switchable valve unit (502) adapted to be operated for switching the chromatography device (500) between different fluid path configurations;
the device (100) is adapted as a liquid chromatography device, preferably
as a High Performance Liquid Chromatography device.

**6.** The device (100) of claim 1 or any one of the above claims, comprising
a control unit (118) being supplied with the measurement signal (116) and being adapted for providing the metering unit (108) with a control signal (120) derived based on the measurement signal (116) for adjusting a flow of the fluidic sample.

**7.** The device (100) of the preceding claim, comprising at least one of:
the control unit (118) is adapted for adjusting the flow of the fluidic sample in a manner that a time required for sample loading is minimized;
the control unit (118) is adapted for adjusting the flow of the fluidic sample in a manner that a speed for sample loading is maximized.

**8.** The device (100) of claim 1 or any one of the above claims, comprising
an injection needle (110) adapted for injecting the fluidic sample from the sample reservoir (104) onto the sample loop (102).

**9.** The device (100) of the preceding claim, comprising at least one of:
a seat (112) adapted to be selectively brought in sealing engagement with the injection needle (110) for guiding the fluidic sample loaded onto the sample loop (102) through the chromatography device (100), and adapted to be selectively brought out of engagement with the injection needle (110) for injecting the fluidic sample onto the sample loop (102);
the injection needle (110) is movable to immerse into the sample reservoir (104) for injecting the fluidic sample onto the sample loop (102);
the flowmeter (106) is arranged between the sample loop (102) and the injection needle (110).

**10.** The device (100) of claim 1 or any one of the above claims, comprising
a chromatographic column (128) couplable for fluid communication with the sample loop (102) and adapted for separating components of the fluidic sample.

**11.** The device (100) of the preceding claim, comprising
a pump (126) couplable for fluid communication with the sample loop (102) and adapted for pumping the fluidic sample loaded onto the sample loop (102) towards the chromatographic column (128).

**12.** The device (100) of the preceding claim, comprising at least one of:
the flowmeter (106) is arranged apart from a fluidic path which is effected by the pump (126);
the sample loop (102) is arranged to be switchable into a fluidic path between the pump (126) and the chromatographic column (128);
the sample loop (102) loaded with the fluidic sample is arranged to be switchable into a fluidic path between the pump (126) and the chromatographic column (128).

**13.** The device of the preceding claim,
wherein the flowmeter (710) comprises a displacement unit (700) at least partly capable of precise displacement, and
the displacement of the displacement unit (700) is a control variable for controlling the fluid intake for determining a flow rate of the fluidic sample.

**14.** A method of operating a chromatography device (100), the method comprising
loading a fluidic sample from a sample reservoir (104) onto a sample loop (102) adapted for receiving the fluidic sample;
generating a measurement signal (116) indicative of a value of a flow of the fluidic sample being loaded from the sample reservoir (104) onto the sample loop (102);
defining an amount of the fluidic sample loaded onto the sample loop (102) based on the measurement signal (116).

**15.** A software program or product, preferably stored on a data carrier, for controlling or executing the method of the preceding claim, when run on a data processing system such as a computer.
